Europäisches Patentamt

(19) European Patent Office

Office européen des brevets

(11) Numéro de publication: **0 077 739**
**B1**

(12) **FASCICULE DE BREVET EUROPEEN**

(45) Date de publication du fascicule du brevet: **07.01.87**

(51) Int. Cl.⁴: **G 01 T 1/29**

(21) Numéro de dépôt: **82401921.0**

(22) Date de dépôt: **19.10.82**

(54) **Dispositif de mesure d'un courant ionique produit par un faisceau d'ions.**

(30) Priorité: **21.10.81 FR 8119760**

(43) Date de publication de la demande:
**27.04.83 Bulletin 83/17**

(45) Mention de la délivrance du brevet:
**07.01.87 Bulletin 87/02**

(84) Etats contractants désignés:
**DE GB NL**

(56) Documents cités:
**US-A-3 551 675**

**PHYSICS LETTERS, vol. 43A, no. 2, 26 février 1973, page 147, New York, USA, F. FUKUZAWA: "Measurement of equilibrium charge distribution with a thick target"**

**REV. SCI. INSTRUM., vol. 47, no. 12, décembre 1976, pages 1511-1515, New York, USA, P. SCHERB et al.: "Atomic beam spectrometer for surface investigations"**

**IEEE TRANSACTIONS ON NUCLEAR SCIENCE, vol. NS-22, no. 3, 1975, pages 1526-1528, New York, USA, R.F. BENTLEY et al.: "Pulsed beam chopper for LAMPF"**

(73) Titulaire: **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur: **Boyer, Robert La Coudounière Route du Val des Nymphes La Garde Adhemar**
**F-26700 Pierrelatte (FR)**
Inventeur: **Duval, Claude**
**Quartier Chanteperdrix Route de la Garde Adhemar**
**F-26130 Saint Paul Trois Chateaux (FR)**

(74) Mandataire: **Mongrédien, André et al**
**c/o BREVATOME 25, rue de Ponthieu**
**F-75008 Paris (FR)**

(56) Documents cités:
**IBM TECHNICAL DISCLOSURE BULLETIN, vol. 17, no. 8, janvier 1975, page 2467, New York, USA, J. KELLER et al.: "In-line Faraday cup for ion implantation"**

Description

La présente invention concerne un dispositif de mesure d'un courant ionique produit par un faisceau d'ions monocinétiques. Elle s'applique notamment à la mesure des courants ioniques produits par les faisceaux d'ions issus de la source d'un spectromètre de masse.

On connaît divers dispositifs de mesure de courants ioniques, notamment en spectrométrie de masse. La difficulté essentielle dans ces mesures résulte du fait que les courants ioniques sont très faibles et que, malgré l'utilisation de chaînes d'amplification et d'"ampèremètres" coûteux, il est difficile de mesurer directement des courants dont la valeur est inférieure à $10^{-16}$ ampère. Les chaînes d'amplification sont généralement des chaînes d'amplification en courant continu, et il arrive souvent que les courants de fuite ou que le bruit de fond aient une amplitude supérieure à celle du courant à mesurer.

On sait en partie remédier à cet inconvénient en utilisant des dispositifs de mesure comprenant des chaînes d'amplification en courant alternatif. Pour pourvoir utiliser ces chaînes d'amplification en courant alternatif, deux méthodes sont connues:

— on peut moduler le faisceau ionique au moment de sa formation. Dans un spectromètre de masse, cette modulation intervient à la sortie de la chambre d'ionisation, avant l'espace qui est soumis à un champ magnétique de séparation des ions issus de la source. Cette modulation peut être réalisée, par exemple, par un dispositif rotatif ou vibrant traversé par les ions issus de la chambre. Cette modulation à la source, a pour principal inconvénient d'affecter le faisceau d'ions avant la séparation magnétique.

Un tel dispositif est décrit par exemple dans la revue IBM Technical Disclosure Bulletin — Volume 17 — No. 8 — janvier 1975 — page 2467.

— on sait également effectuer une modulation du courant issu des collecteurs d'ions. Cette modulation a pour principal inconvénient d'être effectuée sur des courants très faibles ($10^{-15}$ à $10^{-16}$ A.): Comme les amplificateurs de la chaîne travaillent en boucle fermée utilisant des contre-réactions dans lequelles interviennent des résistances de très forte valeur ($10^{10}$ à $10^{12}$ ohms), il en résulte que le bruit propre des résistances ajouté au bruit d'entrée des amplificateurs, à leur courant de fuite et à leur dérive, fournissent un rapport signal/bruit qui limite la détection à 100 µv aux bornes d'une résistance de $10^{11}$ ohms.

L'invention a pour but de remédier à ces inconvénients et notamment de réaliser un dispositif de mesure d'un courant ionique produit par un faisceau d'ions, dans lequel on effectue une modulation de l'intensité du courant ionique grâce à des moyens situés à l'intérieur de la chambre vide après séparation, et au niveau des collecteurs d'ions, ceci permet, comme on le verra plus loin, d'éviter tout problème de bruit de fond lié à une modulation effectuée à l'entrée de la chaîne d'amplification du courant de mesure.

L'invention a pour objet un dispositif de mesure d'un courant ionique produit par un faisceau d'ions monocinétiques, comprenant une chambre à vide reliée à une masse de référence, un diaphragme d'entrée du faisceau d'ions cette chambre, ce diaphragme étant situé à une extrémité du boîtier, des moyens de collection des ions provenant un diaphragme, ces moyens de collection étant situés à une autre extrémité opposée de la chambre, et des moyens de mesure d'une grandeur représentative d'une tension périodique présente entre les moyens de collection et la masse de référence, des moyens situés entre le diaphragme et les moyens de collection, pour provoquer une modulation périodique de l'intensité du courant ionique circulant entre les moyens de collection et la masse de référence, les moyens de mesure étant des moyens de mesure d'un courant périodique ou d'une fréquence, caractérisé en ce que les moyens de modulation comprennent des plaques déflectrices situées dans la chambre et isolées de celle-ci, ces plaques sont parallèles à la direction du faisceau d'ions issus du diaphragme et sont reliées à des moyens pour leur appliquer alternativement et périodiquement des potentiels opposés, de manière à provoquer un balayage alternatif périodique des faisceau d'ions sur les moyens de collection, ces moyens de collection comprenant deux électrodes collectrices juxtaposées, isolées entre elles et isolées de la chambre, balayées alternativement et périodiquement par le faisceau.

Selon une autre caractéristique, les moyens de mesure sont constitués par une chaîne d'amplification et de mesure d'un courant périodique, cette chaîne présentant deux entrées reliées respectivement à chaque électrode collectrice.

Selon une autre caractéristique, le dispositif comprend en outre un convertisseur tension-fréquence dont une entrée est reliée à une sortie de la chaîne d'amplifiction, et dont une sortie est reliée à une entrée de commande des moyens qui permettent d'appliquer alternativement et périodiquement aux plaques déflectrices, des potentiels opposés, de manière à asservir la fréquence de balayage des électrodes de collection avec l'intensité du courant ionique.

— la figure 1 représente très schématiquement le dispositif de l'invention,

— la figure 2 représente schématiquement le dispositif de mesure conforme à l'invention.

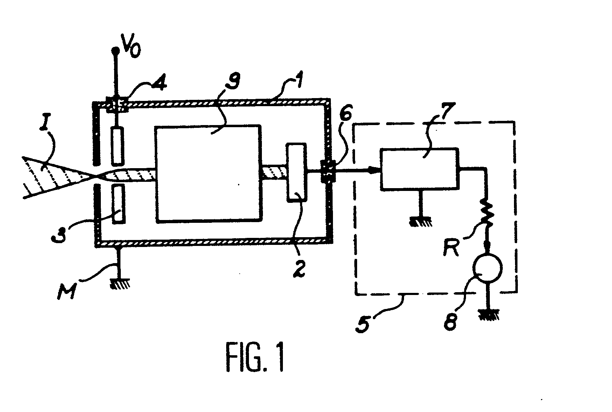

La figure 1 représente très schématiquement le dispositif de mesure conforme à l'invention. Ce dispositif de mesure permet de mesurer le courant ionique produit par un faisceau I d'ions, provenant par exemple de la fente de sortie d'un spectromètre de masse (non représenté) à partir d'une mesure de tension ou de courant. Le dispositif comprend une chambre à vide 1 reliée à une masse de référence M, un diaphragme 3 d'entrée du faisceau dans la chambre; ce diaphragme 3 est porté à un potentiel $V_0$ par exemple, et traverse la chambre par un passage isolant 4. Il est bien évident qu'il peut être constitué par une ou plusieurs lentilles électroniques et qu'il permet de transformer le faisceau d'ions qui parvient à une extrémité de la chambre en un faisceau d'ions parallèle à l'axe de cette chambre. Le dispositif comprend aussi des moyens de collection 2 desions situés à une autre extrémité opposée de la chambre, et des moyens de mesure 5 qui sont reliés, à travers un passage isolant 6, aux moyens de collection 2. Ces moyens de mesure sont constitués par exemple par une chaîne d'amplification 7 suivie d'un appareil de mesure 8, tel qu'un ampèremètre mesurant le courant dans une résistance R, ce courant étant proportionnel au courant ionique. Il est bien évident que la mesure pourrait être celle d'une tension, en sortie de la chaîne d'amplification. Le système comprend aussi des moyens 9 qui seront décrits plus loin en détail situés entre le diaphragme 3 et les moyens de collection 2 et qui permettent d'obtenir une modulation périodique de l'intensité du courant ionique qui circule entre les moyens de collection 2 et la masse de référence.

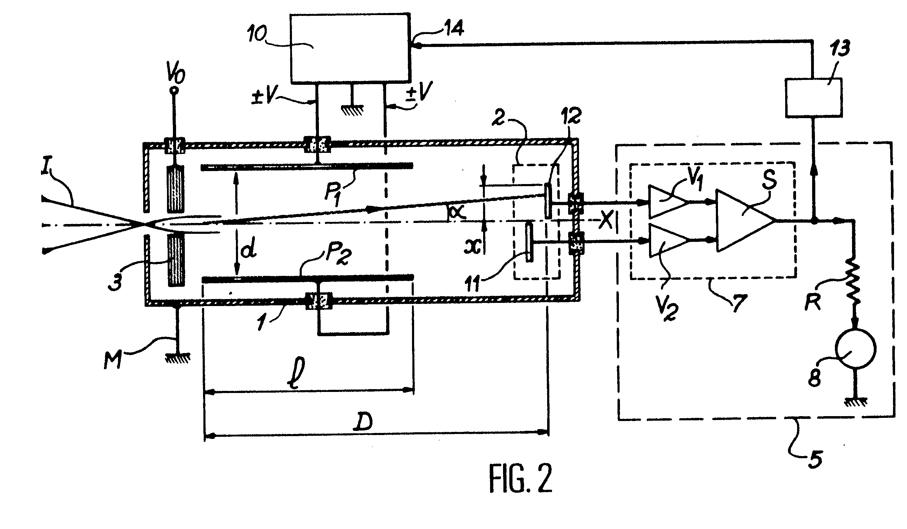

La figure 2 représente de manière plus détaillée le dispositif conforme à l'invention. Les mêmes éléments portent les mêmes références sur cette figure et sur la figure 1. Dans ce dispositif conforme à l'invention, les moyens de modulation 9 comprennent deux plaques déflectrices P1, P2, situées dans la chambre à vide (1) et isolées de celle-ci. Ces plaques sont parallèles à la direction du faisceau d'ions issu du diaphragme 3, et elles sont reliées à des moyens 10 qui permettent de leur appliquer alternativement et périodiquement des potentiels opposés; il en résulte un balayage alternatif et périodique des moyens de collection 2 par le faisceau d'ions. Les moyens de collection sont constitués par deux électrodes collectrices 11, 12 juxtaposées, isolées entre elles et isolées de la chambre. Ces électrodes sont balayées alternativement et périodiquement par le faisceau issu des plaques P1, P2, par suite de la variation périodique alternative du champ électrique entre ces plaques. La chaîne d'amplification et de mesure qui est reliée aux moyens de collection 2 est ici constituée par deux voies d'amplification A1, A2, reliées par exemple à un sommateur S. Chacune de ces voies amplifie le signal reçu sur l'entrée correspondante et provenant de l'une des électrodes de collection 11, 12. En fait, à la sortie de chacune des voies A1, A2, on obtient des impulsions périodiques dont la fréquence dépend de la fréquence à laquelle les tensions qui sont appliquées alternativement aux plaques P1, P2, sont commutées et dont l'amplitude dépend de l'intensité du faisceau d'ions. La sortie du sommateur S est reliée par exemple à un ampèremètre alternatif 8, par l'intermédiaire d'une résistance R.

Le dispositif comprend aussi un convertisseur tension-fréquence 13 dont une entrée est reliée à une sortie de la chaîne d'amplification 7 et dont une sortie est reliée à une entrée de commande 14 des moyens 10 qui permettent d'appliquer alternativement et périodiquement aux plaques déflectrices P1, P2, des potentiels opposés. Ce convertisseur tension-fréquence permet en fait d'asservir la fréquence de balayage des électrodes 11, 12, de connexion des ions avec l'intensité du courant ionique. Les moyens 10 peuvent être constitués, par exemple par un générateur de tensions, de type connu dont les sorties changent de polarité par rapport à la masse de référence, en fonction d'un signal de commutation appliqué sur son entrée de commande 14.

Le dispositif qui vient d'être décrit permet bien de mesurer à l'aide de chaînes d'amplification et de mesure alternatives, l'intensité de courants ioniques produits par un faisceau d'ions, sans qu'il soit nécessaire de moduler ce faisceau sur la sortie de la source d'ions ou en sortie des moyens de collection. Il permet ainsi d'éviter tous les problèmes de positionnement du dispositif de mesure par rapport à la source et tous les problèmes qui, avec les dispositifs connus, sont dus au bruit de fond résultant de la modulation des signaux issus des moyens de collection des ions. Ce dispositif est de construction très simple. Il est en effet très facile de calculer la déviation x du faisceau sur chacune des électrodes et la valeur absolue V du potentiel appliquée sur chacune des plaques déflectrices P1, P2, ce potentiel pouvant prendre alternativement et périodiquement les valeurs +V et −V sur chacune de ces plaques déflectrices. En effet, si l'on désigne par:

— α l'angle de déviation du faisceau d'ions entre les plaques déflectrices, par rapport à l'axe du dispositif;

— E le champ électrique entre les plaques déflectrices;

— $V_0$ la tension d'accélération du faisceau par le diaphragme 3;

— d la distance entre les plaques déflectrices;

— V la valeur absolue de la tension appliquée à chacune des plaques déflectrices;

— $v_0$ est la vitesse des ions monocinétiques selon l'axe longitudinal XX' du dispositif, au moment de leur entrée dans le champ électrique E; m est la masse des ions monocinétiques;

— D la distance entre l'extrémité des plaques déflectrices du côté deu diaphragme et les électrodes de collection;

— l la longueur des plaques déflectrices, il est possible d'écrire

$$tg\alpha = \frac{e}{m} \cdot E \cdot \frac{l}{v_0{}^2}$$

On sait également que

$$\frac{1}{2} m v_0{}^2 = eV_0 \text{ et,}$$

$$E = \frac{v}{b}$$

d'où il en résulte

$$tg\alpha = \frac{1}{2d} \cdot \frac{V}{V_0}$$

d'où el est possible de déduire:

$$x = \frac{ID}{2d} \cdot \frac{V}{V_0}$$

$$V = x \cdot \frac{2d}{1D} \cdot V_0.$$

## Revendications

1. Dispositif de mesure d'un courant ionique produit par un faisceau (I) d'ions monocinétiques, comprenant une chambre à vide (1) reliée à une masse de référence (M), un diaphragme (3) d'entrée du faisceau d'ions dans cette chambre, ce diaphragme étant situé à une extrémité de la chambre à vide (1), des moyens (2) de collection des ions provenant du diaphragme, ces moyens de collection étant situés à une autre extrémité opposée de la chambre, et des moyens de mesure (5) d'une grandeur représentative d'une tension périodique présente entre les moyens de collection (2) et la masse de référence, des moyens (9) situés entre le diaphragme (3) et les moyens de collection (2), pour provoquer une modulation périodique de l'intensité du courant ionique circulant entre les moyens de collection (2) et la masse de référence (M), les moyens de mesure (5) étant des moyens de mesure d'un courant périodique ou d'une fréquence, caractérisé en ce que les moyens de modulation (9) comprennent deux plaques déflectrices (P1, P2) situées dans la chambre à vide (1) et isolées de celle-ci, ces plaques ($P_1$, $P_2$) sont parallèles à la direction du faisceau (I) d'ions issus du diaphragme (3) et sont reliées à des moyens (10) pour leur appliquer alternativement et périodiquement des potentiels opposés, de manière à provoquer un balayage alternatif périodique des moyens (2) de collection par lea faisceau (I) d'ions, ces moyens de collection (2) comprenant deux électrodes collectrices (11, 12) juxtaposées, isolées entre elles et isolées de la chambre à vide (1), balayées alternativement et périodiquement par le faisceau (I) d'ions.

2. Dispositif selon la revendication 1, caractérisé en ce que les moyens de mesure (5) de ladite grandeur représentative sont constitués par une chaîne (7) d'amplification et de mesure d'un courant périodique, cette chaîne présentant deux entrées reliées respectivement à chaque électrode collectrice (11, 12).

3. Dispositif selon la revendication 2, caractérisé en ce qu'il comprend en outre un convertisseur tension-fréquence (13) dont une entrée est reliée à une sortie de la chaîne d'amplification (7)

et dont une sortie est reliée à une entrée de commande (14) des moyens (10) qui permettent d'appliquer alternativement et périodiquement aux plaques déflectrices (P1, P2), des potentiels opposés, de manière à asservir la fréquence de balayage des électrodes collectrices (11, 12) par le faisceau d'ions (I), avec l'intensité du courant ionique.

## Patentansprüche

1. Gerät zur Messung eines durch einen monokinetischen Ionenstrahl (I) erzeugten Ionenstroms mit einer mit einer Bezugsmasse (M) verbundenen Vakuumkammer (1), einer Eintrittsblende (3) für den Ionenstrahl in diese Kammer, wobei sich diese Blende an einem Ende der Vakuumkammer (3) befindet, Auffangmitteln (2) für die von der Blende herkommenden Ionen, wobei sich die Auffangmittel an einem anderen, gegenüberliegenden Ende der Kammer befinden, und Meßmitteln (5) für eine eine periodische Spannung angebende Größe, die zwischen den Auffangmitteln (2) und der Bezugsmasse vorhanden ist, wobei sich Mittel (9) zwischen der Blende (3) und den Auffangmitteln (2) befinden, um eine periodische Modulation der Intensität des zwischen den Auffangmitteln (2) und der Bezugsmasse (M) fließenden Ionenstromes und wobei die Meßmittel (5) Mittel zum Messen eines periodischen Stromes oder einer Frequenz sind, dadurch gekennzeichnet, daß die Modulationsmittel (9) zwei sich in der Vakuumkammer (1) befindende und von dieser isolierte Ablenkplatten (P1, P2) umfassen, daß diese Platten (P1, P2) parallel zu der Richtung des von der Blende (3) ausgehenden Ionenstroms (I) verlaufen und mit Mitteln (10) verbunden sind, um an sie abwechselnd und periodisch entgegengesetzte Potentiale anzulegen derart, daß sie eine abwechselnde, periodische Abtastung der Auffangmittel (2) durch den Ionenstrahl (1) hervorrufen, und daß diese Auffangmittel (2) zwei nebeneinander angeordnete, voneinander und von der Vakuumkammer (1) isolierte, abwechselnd und periodisch von dem Ionenstrom (I) abgetastete Auffangelektroden (11, 12) aufweisen.

2. Gerät nach Anspruch 1, dadurch gekennzeichnet, daß die Meßmittel (5) für die darstellende Größe von einer Verstärker- und Meßkette (7) für einen periodischen Strom gebildet sind, wobei diese Kette zwei jeweils mit einer der Auffangelektroden (11, 12) verbundene Eingänge aufweist.

3. Gerät nach Anspruch 2, dadurch gekennzeichnet, daß es ferner einen Spannungs-Frequenz wandler (13) aufweist, dessen einer Eingang mit einem Ausgang der Verstärkerkette (7) und dessen einer Ausgang mit einem Steuereingang (14) der Mittel (10) verbunden ist, die ermöglichen, abwechselnd und periodisch an die Ablenkplatten (P1, P2) entgegengesetzte Potentiale derart anzulegen, daß die Frequenz zum Abtasten der Auffangelektroden (11, 12) mit dem Iononstrahl (I) mit der Intensität des Ionenstroms geregelt wird.

## Claims

1. Device for the measurement of an ion current produced by a monokinetic ion beam (I), comprising a vacuum chamber (1) connected to a reference ground (M), a diaphragm (3) for entry of the ion beam into this chamber, this diaphragm being situated at one end of the vacuum chamber (1), means (2) for collection of the ions originating from the diaphragm, these collecting means being situated at another, opposite end of the chamber, and means for measurement (5) of a quantity representing a periodic voltage present between the collecting means (2) and the reference ground, means (9) situated between the diaphragm (3) and the collecting means (2), for causing a periodic modulation of the intensity of the ion current circulating between the collecting means (2) and the reference ground (M), the measuring means (5) being means for measurement of a periodic current or of a frequency, characterized in that the modulating means (9) comprise two deflecting plates (P1, P2) situated in the vacuum chamber (1) and insulated from the latter, these plates (P1, P2) are parallel to the direction of the ion beam (I) emerging from the diaphragm (3) and are connected to means (10) for applying opposite potentials to them alternately and periodically, in such a manner as to cause a periodic alternate scanning of the collecting means (2) by the ion beam (I), these collecting means (2) comprising two collecting electrodes (11, 12) which are juxtaposed and which are insulated from one another and insulated from the vacuum chamber (1), and which are scanned alternately and periodically by the ion beam (I).

2. Device according to Claim 1, characterized in that the means for measurement (5) of the said representative quantity are constituted by a system (7) for amplification and for measurement of a periodic current, this system exhibiting two inputs respectively connected to each collecting electrode (11, 12).

3. Device according to Claim 2, characterized in that it further comprises a voltage-frequency converter (13), one input of which is connected to an output of the amplifying system (7) and one output of which is connected to a command input (14) of the means (10) which permit application, alternately and periodically, of the opposite potentials to the deflecting plates (P1, P2), in such a manner as to make the frequency of scanning of the collecting electrodes (11, 12) by the ion beam (I) dependent upon the intensity of the ion current.

FIG. 1

FIG. 2